(19) Europäisches Patentamt
European Patent Office
Office européen des brevets

(11) **EP 4 361 205 A1**

(12) **EUROPEAN PATENT APPLICATION**

(43) Date of publication:
**01.05.2024 Bulletin 2024/18**

(21) Application number: **23206538.3**

(22) Date of filing: **27.10.2023**

(51) International Patent Classification (IPC):
**C08J 9/00** (2006.01)        **B29C 44/34** (2006.01)
**C08J 9/12** (2006.01)

(52) Cooperative Patent Classification (CPC):
**C08J 9/122; B29C 44/3446; C08J 9/0066;**
B29K 2067/046; C08J 2203/06; C08J 2205/052;
C08J 2367/04

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.10.2022 JP 2022174399**

(71) Applicant: **Ricoh Company, Ltd.
Tokyo 143-8555 (JP)**

(72) Inventor: **OGAWA, Satoshi
Tokyo, 143-8555 (JP)**

(74) Representative: **Marks & Clerk LLP
15 Fetter Lane
London EC4A 1BW (GB)**

(54) **FOAMED POLYLACTIC ACID SHEET, METHOD OF MANUFACTURING FOAMED POLYLACTIC ACID SHEET, AND PRODUCT**

(57)    A foamed polylactic acid sheet contains a polylactic acid resin, wherein the foamed polylactic acid sheet has a bulk density of 0.250 or less g/cm$^3$, the foamed polylactic acid sheet has a melt viscosity of 5,000 to 30,000 Pa s at 190 degrees Celsius, the foamed polylactic acid sheet has a crystallinity of 35 or less percent as analyzed by differential scanning calorimetry.

**EP 4 361 205 A1**

**Description**

BACKGROUND

Technical Field

The present disclosure is related to a foamed polylactic acid sheet, a method of manufacturing a foamed polylactic acid sheet, and a product.

Description of the Related Art

Plastic products are processed into shapes such as bags or containers, which are widely distributed. Of these, foamed sheets produced by expanding plastic are lightweight with excellent insulation or cushioning. For this reason, they are massively used as cushioning materials and food containers, for example. For such a massive consumption, people have become concerned about environmental issues and are actively involved in sustainable development goals (SDGs).

This trend leads to an expectation for developing biodegradable resins and plant-derived plastics, including products using plant-derived and compostable polylactic acid (PLA) resins.

Currently, some plastic products made of PLA resin are already commercially available; however, such PLA products are not appealing because of their characteristic resin properties, which are significantly different from those of plastic products known in the art. A case in point is a thin film foamed PLA sheet for cushioning for use in a material including a packing material.

The resin used is hard and sticky. This stickiness causes sticky string and bubble breaking at the outlet of an extruder, forming a granulated surface. Also, the hardness results in a lack of flexibility of the sheet.

A film made of a PLA compound has also been proposed in Japanese Patent No. 4042206 (Japanese Unexamined Patent Application Publication No. H11-302521).

The film is made of a highly crystalline PLA (A) with an optical purity of 80 or more percent and a low-crystalline or amorphous PLA (B) with an optical purity of 54 percent to less than 80 percent at a mass ratio of (A)/(B) = 10/90 to 90/10, while having a stable storage elastic modulus of $6 \times 10^6$ or less Pa over a temperature range of at least 30 degrees Celsius as measured by the test according to JIS-K7198 B method format regarding temperature dependence of dynamic viscoelasticity.

In addition, a method of manufacturing a PLA-based resin foam has been proposed in Japanese Patent No. 4578309 (Japanese Unexamined Patent Application Publication No. 2006-2137).

In this method, the PLA-based resin foam with a density of 0.13 to 0.6 g/cm$^3$ is manufactured by supplying a crystalline PLA resin satisfying the condition of { melting point (mp) of the PLA-based resin - 40 degrees Celsius} $\leq$ (temperature T at the intersection of storage elastic modulus curve and loss elastic modulus curve) $\leq$ (mp of the PLA-based resin) and a cell regulator to an extruder, melt-kneading the mixture under the presence of a foaming agent, and extrusion-foaming the melt-kneaded mixture from a mold attached to the tip of the extruder.

Moreover, a PLA-based resin composition has been proposed in Japanese Unexamined Patent Application Publication No.2015-101620.

The PLA resin composition is formed by cross-linking a PLA-based resin obtained from an initiator of (meth)acrylic-based polymer (B) having a hydroxy group with (meth)acrylic acid ester compound (C) and satisfies: (i) (B) had a number average molecular weight of 20,000 or greater and a number average molecular weight of 200 to 1,500 per hydroxy group; and (ii) the respective proportions of (B) and (C) to 100 parts of the PLA component (A) of the PLA-based resin are 1.0 to 5.0 parts by mass and 0.1 to 1.0 part by mass.

SUMMARY

According to the present disclosure, a foamed polylactic acid sheet is provided that demonstrates a high expansion ratio and smooth surface with excellent cushioning, flexibility, and wrapping followability.

According to embodiments of the present disclosure, a foamed polylactic acid sheet is provided that contains a polylactic acid resin, wherein the foamed polylactic acid sheet has a bulk density of 0.250 or less g/cm$^3$, the foamed polylactic acid sheet has a melt viscosity of 5,000 to 30,000 Pa s at 190 degrees Celsius, the foamed polylactic acid sheet has a crystallinity of 35 or less percent as analyzed by differential scanning calorimetry.

As another aspect of embodiments of the present disclosure, a method of manufacturing a foamed polylactic acid sheet is provided that includes melting a polylactic acid resin, kneading the polylactic acid resin under a presence of a compressive fluid to obtain a polylactic acid resin composition, purging the polylactic acid resin composition of the compressive fluid, and expanding the polylactic acid resin composition to obtain the foamed polylactic acid sheet with a bulk density of 0.250 or less g/cm$^3$, a melt viscosity of 5,000 to 30,000 Pa s at 190 degrees C, and a crystallinity of 35 or less percent as analyzed by differential scanning calorimetry.

As another aspect of embodiments of the present disclosure, a product is provided that contains the foamed polylactic acid sheet mentioned above.

BRIEF DESCRIPTION OF THE DRAWING

A more complete appreciation of the disclosure and many of the attendant advantages and features thereof can be readily obtained and understood from the following detailed description with reference to the accompanying drawing, wherein:

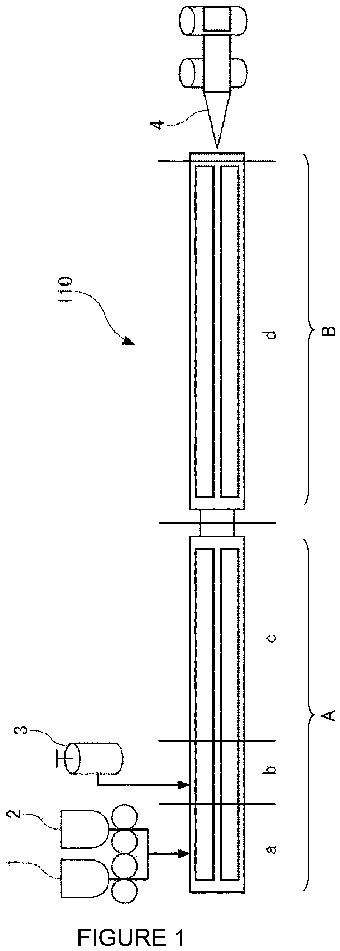

FIGURE 1 is a schematic diagram illustrating a continuous forming device for use in manufacturing the foamed PLA sheet according to an embodiment of the present disclosure.

The accompanying drawing is intended to depict example embodiments of the present invention and should not be interpreted to limit the scope thereof. The accompanying drawing is not to be considered as drawn to scale unless explicitly noted. Also, identical or similar reference numerals designate identical or similar components throughout the several views.

DESCRIPTION OF THE EMBODIMENTS

The terminology used herein is for the purpose of describing particular embodiments only and is not intended to be limiting of the present invention. As used herein, the singular forms "a," "an," and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Embodiments of the present invention are described in detail below with reference to accompanying drawing. In describing embodiments illustrated in the drawings, specific terminology is employed for the sake of clarity. However, the disclosure of this patent specification is not intended to be limited to the specific terminology so selected, and it is to be understood that each specific element includes all technical equivalents that have a similar function, operate in a similar manner, and achieve a similar result.

For the sake of simplicity, the same reference number will be given to identical constituent elements such as parts and materials having the same functions and redundant descriptions thereof omitted unless otherwise stated.

Foamed Polylactic Acid Sheet and Method of Manufacturing Foamed Polylactic Acid Sheet

The foamed polylactic acid (PLA) sheet of the present disclosure contains at least a PLA resin and other optional components.

The foamed PLA sheet of the present disclosure has a bulk density of 0.250 or less g/cm$^3$, a melt viscosity of 5,000 to 30,000 Pa s at 190 degrees Celsius, and a crystallinity of 35 or less percent as analyzed by differential scanning calorimetry.

The foamed PLA sheet of the present disclosure is suitably manufactured by the method of manufacturing a foamed PLA sheet of the present disclosure.

The method of manufacturing a foamed PLA sheet includes at least: melting a PLA resin; kneading the PLA resin under a presence of a compressive fluid to obtain a PLA resin composition; purging the PLA resin composition of the compressive fluid; expanding the PLA resin composition to obtain the foamed PLA sheet with a bulk density of 0.250 or less g/cm$^3$, a melt viscosity of 5,000 to 30,000 Pa s at 190 degrees C, and a crystallinity of 35 or less percent as analyzed by differential scanning calorimetry; and other optional processes.

The usage of the foamed PLA sheet of the present disclosure is not particularly limited and can be suitably selected to suit to a particular application. Foamed PLA sheets can be suitably used for cushioning because of their high expansion ratio, cushioning, flexibility, wrapping followability, and smooth surface.

In general, the foam sheet for cushioning is manufactured by extrusion molding.

The inventor of the present invention has found that, since PLA resins are highly crystalline linear polyesters, the resins melted to aim a high expansion ratio have relatively low stickiness, which causes bubbles to break during expansion. The broken bubbles leave marks on the surface of a foamed PLA sheet. The resulting sheet thus involves a problem of the surface with irregularities.

Although the viscosity can be controlled with a chain extender or a cross-linking agent, the inventor of the present invention has also found that highly sticky PLA resins are likely to adhere to a mold at the outlet of an extruder during extrusion molding and extruded adhering to the mold, producing many sticky strings of the PLA resin on the surface of a resulting foamed PLA sheet. The sticky strings look as if they were pulled and broken in fibrous forms.

As a result of the investigation on such issues made by the inventor of the present invention, it has been found that the composition of raw materials and processing conditions can control the crystallinity of a foamed PLA sheet.

Crystalline PLA resin relatively quickly crystallizes although depending on its optical purity. The inventor of the present invention has also found that, as PLA resin crystallizes, the resin loses its stickiness depending on the compositions of raw materials and processing conditions, which causes bubbles to break at expansion and leaving marks on the surface of a foamed PLA sheet formed of the resin. These marks result in irregularities on the surface. In addition, the foamed PLA sheet of crystallized PLA resin hardens, losing flexibility. This inflexible foam sheet loses cushioning and protection effects, not following the curvature but forming angled portions when the sheet wraps a cylindrical object such as bottles.

As a result of a further investigation on such issues, the inventor of the present invention has formulated a foamed PLA sheet with a high expansion ratio, cushioning, flexibility, wrapping followability, and smooth surface by controlling its bulk density, melt viscosity, and crystallinity within certain ranges.

In Japanese Patent No. 4042206 (Japanese Unexamined Patent Application Publication No. H1 1-302521), two types of poly resins with different crystallinity are used in combination to adjust the crystallinity and regulate the storage elastic modulus within a particular range, thus improving the mold processability of a film to be made. However, the expansion ratio, cushioning, flexibility, wrapping followability, and surface properties are unsatisfactory.

Japanese Patent No. 4578309 (Japanese Unexamined Patent Application Publication No. 2006-2137) uses a raw material with a specific range of viscoelasticity to obtain a mold product with a specific range of density. However, the flexibility, wrapping followability, and surface properties could be better.

Japanese Unexamined Patent Application Publication No.2015-101620 is to obtain a PLA resin composition with a high expansion ratio by adjusting the melt tension by controlling the molecular weight. However, the flexibility, wrapping followability, and surface properties could be more satisfactory.

In contrast to these technologies, the foamed PLA sheet of the present disclosure demonstrates a high expansion ratio and sufficient cushioning with a smooth surface without roughness, granularity, or scratching.

The foamed PLA sheet of the present disclosure is described below, together with the method of manufacturing a foamed PLA sheet of the present disclosure. It is to be noted that the following embodiments are not limiting the present disclosure and any deletion, addition, modification, change, etc. can be made within a scope in which man in the art can conceive including other embodiments, and any of which is included within the scope of the present invention as long as the effect and feature of the present disclosure are demonstrated.

Foamed PLA Sheet

The PLA sheet of the present disclosure contains at least a PLA resin and other optional components.

Bulk Density

The bulk density of the foamed PLA sheet refers to the mass per volume of the foamed PLA sheet with bubbles.

The bulk density of the foamed PLA sheet is 0.250 or less g/cm$^3$, preferably 0.200 or less g/cm$^3$, and more preferably 0.086 or less g/cm$^3$. A bulk density of the foamed PLA sheet of greater than 0.250 g/cm$^3$ increases the mass per unit of volume, reducing the air layer of bubbles. The foamed PLA sheet thus fails to achieve sufficient cushioning. A bulk density of the foamed PLA sheet of 0.250 or less g/cm$^3$ increases the volume by bubbles, demonstrating cushioning attributable to the presence of bubbles.

The lower limit of the bulk density of the foamed PLA sheet is not particularly limited and can be suitably selected to suit to a particular application. The bulk density is preferably 0.015 g/cm$^3$ or greater to obtain a rigid foamed PLA sheet.

From a prescription point of view, for example, changing the melt viscosity of the PLA resin or adding a filler acting as a nucleating agent for foaming can adjust the bulk density of the foamed PLA sheet. Specifically, the bulk density decreases by increasing the melt viscosity of the PLA resin or adding a filler.

In manufacturing, the bulk density of the foamed PLA sheet mentioned above can be adjusted by, for example, adjusting the temperature around the outlet of a foaming device to adjust its melt viscosity or adjusting the temperature in kneading the PLA resin to control the reaction of the PLA resin with a cross-linking agent. Specifically, the bulk density can be adjusted by, for example, lowering the temperature around the outlet of a bubble forming device to adjust its melt viscosity or raising the temperature in kneading the PLA resin to control the reaction of the PLA resin with a cross-linking agent.

The bulk density of the foamed PLA sheet can be measured in the following manner.

A foamed PLA sheet with a length of 1 cm and a width of 2.5 cm is prepared as a measuring sample. The mass W (g) of the sample is measured. Subsequently, the volume of the sample in water is measured. One way of measuring the volume of a sample is to pour 8 mL of pure water into a 10 mL measuring cylinder followed by placing the sample in the cylinder to read the increased volume V in the cylinder. At this point, mL is converted into $cm^3$. The bulk density D ($g/cm^3$) of the measuring sample is calculated according to the following Relationship 1.

$$\text{Bulk density D (g/cm}^3\text{)} = \text{mass W (g) / volume (V/cm}^3\text{)} \qquad \text{Relationship 1}$$

The expansion ratio of the foamed PLA sheet is obtained by dividing the density (true density d) of the PLA resin in the foam sheet by the bulk density D, as in Relationship 2 below. This foamed PLA sheet has a high expansion ratio, considering its bulk density of 0.250 or less $g/cm^3$.

$$\text{Expansion ratio} = \text{true density (d) / bulk density (D)} \qquad \text{Relationship 2}$$

The true density represents the density of the PLA resin for the final plastic composition in Relationship 2. It can be obtained from a reference value or by measuring a non-foamed compound pellet. The PLA resin has a true density of about 1.25 $g/cm^3$.

Melt Viscosity

The melt viscosity of the foamed PLA sheet is from 5,000 to 30,000 Pa·s, preferably from 6,500 to 25,000 Pa·s, and more preferably from 6,500 to 22,000 Pa·s. A melt viscosity of the foamed PLA sheet of less than 5,000 Pa·s is insufficient to obtain a sheet with a high expansion ratio, failing to find out a suitable foaming agent. The bubbles in the sheet break at the outlet of an extruder without a foaming agent. Therefore, a foamed PLA sheet obtained has a granulated surface due to the bubble breakage, failing to ensure cushioning. A melt viscosity of the foamed PLA sheet surpassing 30,000 Pa·s causes the PLA resin to adhere to the mold disposed at the outlet of an extruder in extracting the foamed PLA sheet from the outlet, forming PLA resin extended on the surface of the sheet. The sheet surface obtained feels rough and has insufficient flexibility, degrading the followability of wrapping a cylindrical object with the sheet. A melt viscosity of the foamed PLA sheet of 5,000 to 30,000 Pa·s results in a high expansion ratio with excellent cushioning and surface properties.

The term followability of wrapping, or wrapping followability, refers to the degree of the gap or bent and fold between the foamed PLA sheet and a cylindrical object, such as a bottle, in wrapping the object with the sheet. A foamed PLA sheet with a high wrapping followability is preferable as a cushioning or protection material.

From a prescription point of view, the melt viscosity of the foamed PLA sheet can be adjusted by changing the melt viscosity or the number of terminal functional groups of the PLA resin or the type or content of a cross-linking agent, for example. Specifically, the PLA resin sheet becomes more sticky by, for example, increasing the viscosity or the number of the terminal functional groups of the PLA resin, or increasing the content of a cross-linking agent.

In manufacturing, one way of adjusting the melt viscosity of the foamed PLA sheet is to control the reaction by changing the reaction temperature during kneading. Specifically, the melt viscosity of the foamed PLA sheet increases by raising the temperature during kneading to accelerate the reaction.

The melt viscosity of the foamed PLA sheet can be confirmed by measuring a foamed PLA sheet dried at 80 degrees C for two or more hours with a flow tester under the following measuring conditions.

Measuring Conditions

- Flow tester: CFT-100D, available from Shimadzu Corporation
- Test temperature: 190 degrees C
- Measuring mode: constant temperature method
- Nozzle dimension: diameter of 1 mm with length of 10 mm

Crystallinity

The foamed PLA sheet has a crystallinity of 35 or less percent, preferably 30 or less percent, more preferably 28 or less percent, as analyzed by differential scanning calorimetry. A foamed PLA sheet with a crystallinity surpassing 35 percent loses its stickiness due to this too-high crystallinity, resulting in bubble breakage as described above. The surface of the foamed PLA sheet obtained thus becomes rough. Moreover, the foamed PLA sheet obtained is hard, inflexible, and rigid. Such a sheet product does not follow the curved surface of a cylindrical object when the object is wrapped with the product. Conversely, a crystallinity of the foamed PLA sheet of 35 or less percent keeps the viscosity of the PLA resin from becoming too low so that a flexible and suitably hard foamed PLA sheet with good surface properties is obtained.

The lower limit of the crystallinity of the foamed PLA sheet analyzed by differential scanning calorimetry is not particularly limited and can be suitably selected to suit to a particular application. The lower limit is preferably 10 or more percent for storage in a high temperature environment.

From a prescription point of view, the crystallinity of the foamed PLA sheet can be adjusted by using a PLA resin with high optical purity or changing the type or content of a filler capable of acting as a crystal nucleating agent. Specifically, the crystallinity of the foamed PLA sheet lowers by using a PLA resin with a low optical purity or reducing the content of a filler.

In manufacturing, one way of adjusting the crystallinity of the foamed PLA sheet is to control the rate of cooling after the discharge from a foaming device. Specifically, the crystallinity of the foamed PLA sheet lowers by upping the cooling speed.

The crystallinity of the foamed PLA sheet is obtained from the crystal melting peak area and cold crystallization peak area of the foamed PLA sheet analyzed according to JIS K 7122-1987 (testing method for heat of transfer of plastics) format.

Differential scanning calorimetry is carried out with a differential scanning calorimeter, Q-2000 (available from TA Instruments), under the following measuring conditions. The area corresponding to the exothermic peak around a temperature range of about 80 to about 110 degrees Celsius during the temperature rising stage is determined as the cold crystallization peak area, while the area corresponding to the endothermic peak at the temperatures higher than the temperature range is determined as the crystal melting peak area. Crystallinity is calculated according to the following Relationship 3.

Measuring Conditions

- Content of sample: 5 to 10 mg
- Temperature range of measuring: 10 to 200 degrees Celsius
- Rate of temperature rising: 10 °C/min
- Purge gas: nitrogen
- Rate of flowing of purge gas: 50 mL/min

$$\text{Crystallinity (percent)} = \{\text{crystal melting peak area (J/g)} - \text{cold crystallization peak area (J/g)}\} / 93 \text{ (J/g)} \times 100 \text{ (percent)} \qquad \text{Relationship 3}$$

Foam Diameter

There is no specific limitation to the foam diameter of the foamed PLA sheet. It can be suitably selected to suit to a particular application.

It is preferably 550 or less $\mu$m, more preferably 500 or less $\mu$m, and furthermore preferably 300 or less $\mu$m. A foam diameter of the foamed PLA sheet of 550 or less $\mu$m thins the foam wall, resulting in a flexible foamed PLA sheet. The lower limit of the foam diameter of the foamed PLA sheet is not particularly limited and can be suitably selected to suit to a particular application. The foam diameter is preferably 10 or more $\mu$m to achieve suitable cushioning.

The type or content of foaming agents and nucleating agents for foaming can adjust the foam diameter of the foamed PLA sheet. Specifically, an increase in the content of a foaming agent and a nucleating agent for foaming is associated with a decrease in the foam diameter of the foamed PLA sheet.

The foam diameter in the present disclosure refers to the average foam diameter and can be measured in the following manner.

A foamed PLA sheet is cut with a razor to expose its cross section to be observed along the thickness direction. This cross section to be observed is shot with a real surface view microscope, VE 7800, available from KEYENCE CORPORATION, with a magnifying power of 300 to 1,000. The photo obtained is subjected to binarization into the white component corresponding to bubbles (void) and the black component corresponding to the resin portion with an open-source software called Image-J. The binarized image is subjected to particle analysis using the software mentioned above to calculate the equivalent circle diameter of individual bubbles (voids). Based on this calculation result, the median diameter D50 is calculated and determined as the average foam diameter.

Thickness

The thickness of the foamed PLA sheet is not particularly limited and can be suitably selected to suit to a particular application. The thickness is preferably from 0.3 to 2.0 mm, more preferably from 0.5 to 1.5 mm, and furthermore preferably from 0.9 to 1.35 mm. A thickness of the foamed PLA sheet of 0.3 or greater mm forms a foamed PLA sheet with a high expansion ratio, ensuring cushioning. A thickness of the foamed PLA sheet of 2.0 or less mm creates a flexible packing material. Such a packing material can cover a cylindrical object along the curvature of its circle without forming an angled portion, demonstrating excellent wrapping followability, cushioning, and protection. A thickness of the foamed PLA sheet of 0.5 to 1.5 mm affords better cushioning, thus providing good protection for an object to be packed.

The viscosity of the PLA resin, as well as the temperature and extracting speed of the PLA resin at discharge from a foaming device, can adjust the thickness of the foamed PLA sheet. Specifically, increasing the thickness is associated with increasing the viscosity of the PLA resin, lowering the temperature of the PLA resin discharged from a foaming device, and slowing down the extraction speed.

The thickness of the foamed PLA sheet in the present specification refers to the average thickness and can be measured in the following manner.

A foamed PLA sheet with a length of 1 cm and a width of 2.5 cm is cut along the traverse direction (TD) into 11 pieces, each spaced equally therebetween, creating measuring samples. A glass slide is placed on a smooth board. A terminal is placed on the glass slide for zero adjustment with a digimatic indicator (ID-C112AX, available from Mitutoyo Corporation). The 11 measuring samples are pinched between the board and the glass slide to measure the samples' thickness. The found values of the 11 measuring samples are averaged to obtain the average thickness.

Ratio of Closed Cell Foam

If the foamed PLA sheet is used as a cushion, the closed cell foam in the sheet acts like an air suspension.

There is no specific limitation to the ratio of closed cell foams in the foamed PLA sheet. It can be suitably selected to suit to a particular application.

It is preferably 25 or more percent, 30 or more percent, and 50 or more percent. A 25 or more percent closed cell foam ratio enhances the cushioning of the foamed PLA sheet, making the sheet suitable as a cushioning material. Conversely, a less than 25 percent closed cell foam ratio causes many bubbles to break, degrading the surface properties due to the bubble breakage close to the surface of a foamed PLA sheet. A foamed PLA sheet with a ratio of the closed cell foam of 25 or more percent produces a flexible foamed PLA sheet with good surface properties. A foamed PLA sheet with a ratio of the closed cell foam of 30 or more percent produces a more flexible foamed PLA sheet with good surface properties. A foamed PLA sheet with a ratio of the closed cell foam of 50 or more percent produces a further flexible foamed PLA sheet with good surface properties.

The ratio of the closed cell foam of foamed PLA sheet can be adjusted by factors such as the viscosity of the foamed PLA sheet, the type and content of a cross-linking agent, and the concentration of a foaming agent. Specifically, increasing the content of a cross-linking agent or lowering the concentration of a foaming agent can prevent bubbles from breaking, increasing the ratio of closed cell foams.

The ratio of closed cell foams in a foamed PLA sheet can be measured according to ASTM D2856 format. Specifically, 25 mm square foamed PLA sheets are stacked on each other to form two 25 mm cubes used as measuring samples. The volume Vg of these samples is measured with a caliper. The measuring samples are measured with a dry automatic densimeter (AccuPyc 1330, available from Shimadzu Corporation) to obtain Volume Vp 1 of the sample.

Each of the two cubes is then equally divided into eight. The resulting 16 samples are measured with the dry automatic densimeter (AccuPyc 1330) to obtain Volume Vp2 of the sample.

The ratio of closed cell foams in a foamed PLA sheet is calculated from the relationship below according to ASTM D2856 format.

Vp1 and Vp2, the volume data obtained at measuring, are expressed as Relationship 4 and Relationship 5 below, where Voc represents the volume of an open cell foam of the measuring sample and Vcc represents the volume of the foams released in the preparation of the measuring samples.

$$Vp1 = Vg - Voc - Vcc \qquad \text{Relationship 4}$$

$$Vp2 = Vg - Voc - 2Vcc \qquad \text{Relationship 5}$$

From Relationships 4 and 5, the volume Voc of the open cell foam of the measuring sample is represented by Relationship 6 below.

$$Voc = Vg - 2Vp1 + Vp2 \quad \text{Relationship 6}$$

In the case that Wpl represents the mass of a PLA resin, Wpe represents the mass of polyethylene, the true density of the PLA resin is 1.25, and the true density of polyethylene is 0.92, Volume Vc of closed cell foams alone is represented by Relationship 7 below and the ratio of closed cell foam Vcc is calculated from Relationship 8 below.

$$Vc = Vg - (Wp1/1.25 + Wpe/0.92) - Voc \quad \text{Relationship 7}$$

$$Vcc = Vc/Vg \times 100 \text{ percent} \quad \text{Relationship 8}$$

PLA Resin

Since microorganisms decompose the PLA resin mentioned above, this resin is appealing as a low environmental impact polymer material, which is friendly to the environment (refer to Inoue, Y, (2001), Structure, Properties, Biodegradability of Aliphatic Polyesters, Polymers, vol. 50, June edition, 374 to 377).

Examples of the PLA resin include, but are not limited to, a copolymer (DL-lactic acid) of D-form (D-lactic acid) and L-form (L-lactic acid); a homopolymer of either D-lactic acid or L-lactic acid; and a ring-opening polymer of one or more lactides selected from the group consisting of D-form (D-lactide), L-form (L-lactide), and DL-lactide. These can be used alone or in combination. The PLA mentioned above can be synthesized or procured.

This PLA resin contains at least one of the D-form of lactic acid and the L-form of lactic acid as a constituent monomer unit (hereinafter, also referred to as optical purity) preferably accounts for 99 or less percent and more preferably 98 or less percent of the PLA resin. An optical purity of the PLA resin of 99 or less percent creates a soft and flexible foamed PLA sheet. In this proportion, the PLA resin can keep its stickiness and reduce the occurrence of bubble breakage, thus producing a foamed PLA sheet with good surface properties.

A PLA resin with a proportion of either the D-form or the L-form of lactic acid as a constituent monomer unit of the PLA resin of 98.0 or more percent can be referred to as a PLA resin in a high optical purity region, while a PLA resin with a proportion of less than 98.0 percent can be referred to as a PLA resin in a low optical purity region compared with the PLA resin in the high optical purity region, although these are no particular limitation.

The lower limit of the optical purity of the PLA resin is not particularly limited and can be suitably selected to suit to a particular application. The lower limit is preferably 94 or more percent to reduce the decomposition of a polymer at 40 degrees C or higher, thus reducing the elution of lactide.

In the case that the PLA resin is a copolymer (DL-lactic acid) of D-lactic acid and L-lactic acid or a ring-opening polymer of one or two or more lactides selected from the group consisting of D-lactide, L-lactide, and DL-lactide, as the lesser of the optical isomer of the D-form and the L-form decreases, the crystallinity is likely to increase and the melting point and the rate of crystallization tend to become high. Conversely, as the minor optical isomer of the D-form and L-form increases, the crystallinity will likely decrease so that the resin becomes amorphous over time. If a foamed PLA sheet is formed of the PLA resin mentioned above, the crystallinity of the PLA resin is associated with the heat resistance of the foamed PLA sheet and the molding temperature of foams.

The content of either the D-form of lactic acid or the L-form of lactic acid, both acting as constituent monomer units of the PLA resin, can be analyzed by liquid chromatography mass spectrometry (LC-MS) using an optically active column. The measurement procedure, measurement equipment, and LC-MS measurement conditions are as follows.

A foamed PLA sheet is subjected to frost shattering. A total of 200 mg of the powder of the frost shattered foamed PLA sheet is weighed with a precision balance and placed in a conical flask. A total of 30 mL of 1 normal sodium hydroxide is added to the flask. Next, the conical flask is shaken and heated to 65 degrees C to completely dissolve the foamed PLA sheet. Subsequently, the pH of the solution obtained is adjusted to 4 to 7 using a 1 normal hydric acid. The solution is diluted to a particular volume using a volumetric flask to obtain a PLA solution. The PLA solution is then filtered with a 0.45 $\mu$m membrane filter, followed by liquid chromatography analysis in the following measuring conditions.

The peak area derived from the D-form of lactic acid and the peak area derived from the L-form of lactic acid are obtained from the chart obtained, and the sum of both peak areas is calculated. Based on these values, the peak area ratio derived from the D-form of lactic acid and the peak area ratio derived from the L-form of lactic acid are then calculated. These results are used as the presence ratio to calculate the content ratios of D-form and L-form. This above-mentioned operation is repeated three times and the results are arithmetically averaged. The average obtained is determined as the amount of D-form and L-form of lactic acid in the PLA resin in a foamed PLA sheet.

Measuring Conditions

· HPLC device (liquid chromatograph): PU-2085 Plus system, available from JASCO Corporation
· Column: Chromolith® coated with SUMICHIRAL OA-5000 with an internal diameter of 4.6 mm and a length of 250 mm, available from Sumika Chemical Analysis Service, Ltd.
· Column temperature: 25 degrees C
· Mobile phase: Liquid mixture of aqueous solution of 2 mM $CuSO_4$ with 2-propanol at a volume ratio of 95:5
· Rate of flow of mobile phase: 1.0 mL/minute
· Detector: UV 254 nm
· Infusing amount: 20 μL

If the larger of the peak area derived from the D-form of lactic acid and the peak area derived from the L-form of lactic acid accounts for 90 or more percent of the sum of both peak areas in the above measurement of the foamed PLA sheet, either the D-form or L-form of lactic acid as the constituent monomer units of the PLA resin can be said to account for 90 or more percent of the foamed PLA sheet.

The proportion of the PLA resin in a foamed PLA sheet is not particularly limited and can be suitably selected to suit to a particular application. The proportion is preferably 95 or more percent by mass, more preferably 97 or more percent by mass, furthermore preferably 98 or more percent by mass, and particularly preferably 99 or more percent by mass to the entire mass of the foamed PLA sheet to enhance biodegradability and recyclability. A proportion of 95 or more percent by mass of the PLA resin enhances biodegradability, preventing the un-biodegraded other components from remaining even when the PLA resin is biodegraded. Moreover, mixing or copolymerizing the PLA resin with other components is not preferable to maintain the characteristics of green plastic and biomasplastic.

Other Optional Components

The other components in the foamed PLA sheet only particularly limited if they impair the effects of the present disclosure and may be appropriately selected from components generally used for foam sheets. Examples include, but are not limited to, a cross-linking agent, a filler, and an additive. These can be used alone or in combination. The foamed PLA sheet preferably contains a cross-linking agent and a filler.

Cross-linking Agent

The foamed PLA sheet preferably contains a cross-linking agent to adjust its viscosity during manufacturing the foamed PLA sheet. Cross-linking agents bind the terminals of adjacent PLA resin in the reaction, blocking the terminals so that moisture adsorption decreases, which leads to the reduction of decomposed product attributable to hydrolysis.

The cross-linking agent is not particularly limited and can be suitably selected to suit to a particular application. Examples include, but are not limited to, an epoxy-based cross-linking agent, oxazoline-based cross-linking agent, and isocyanate-based cross-linking agent. These can be used alone or in combination. Of these, an epoxy-based cross-linking agent is preferable, and an epoxy-based cross-linking agent obtained by modifying an acrylic resin is more preferable to accelerate the reaction with the PLA resin.

Such an epoxy-based cross-linking agent obtained by modifying an acrylic resin can be procured. Specific examples include, but are not limited to, Metablen® P-1901 (available from Mitsubishi Chemical Corporation) and Joncryl® ADR-4468 (available from BASF).

Filler

A filler added to the PLA resin can increase the viscosity of the PLA resin. This sticky PLA resin increases the expansion ratio of the foamed PLA sheet, lowering the bulk density of the foamed PLA sheet. Including a filler is preferable to prevent bubble breakage, producing a foamed PLA sheet with a smooth surface. Moreover, this filler, which is expected to act as a nucleating agent for foaming, enables a foamed PLA sheet to have a small foam diameter, which is advantageous to produce a flexible foamed PLA sheet by fine foaming.

These fillers are not particularly limited and can be suitably selected to suit to a particular application. Specific examples include, but are not limited to, organic fillers and inorganic fillers.

Inorganic Filler

The inorganic filler is not particularly limited and can be suitably selected to suit to a particular application.

Specific examples include, but are not limited to, mica, talc, kaolin, calcium carbonate, layered silicate, zinc carbonate, wollastonite, silica, alumina, magnesium oxide, calcium silicate, sodium aluminate, calcium aluminate, sodium aluminosilicate, magnesium silicate, glass balloon, carbon black, zinc oxide, antimony trioxide, zeolite, hydrotalcite, metal fiber, metal whisker, ceramic whisker, potassium titanate, boron nitride, graphite, glass fiber, and carbon fiber. These can be used alone or in combination.

Organic Filler

The organic filler is not particularly limited and can be suitably selected to suit to a particular application.

Specific examples include, but are not limited to, naturally occurring polymers and their modified products, sorbitol compounds, benzoic acid and metal salts of its compounds, metal salts of phosphoric acid esters, and rosin compounds. These can be used alone or in combination.

Examples of naturally occurring polymers include, but are not limited to, starch, cellulose fine particles, wood flour, bean curd refuse, rice husk, and bran.

Of these, as the filler, inorganic fillers are preferable, and mica is preferable. Mica has a high aspect ratio, increasing foaming efficiency and enabling fine foaming to obtain a flexible foamed PLA sheet. This filler is also preferable to enhance the heat resistance and dispersibility due to the crystallization of the PLA resin.

The volume average particle diameter of the filler is not particularly limited. The volume average particle diameter is preferably from 10 nm to 200 $\mu$m, more preferably from 0.1 to 160 $\mu$m, and furthermore preferably from 0.1 $\mu$m to 100 $\mu$m. A volume average particle diameter of fillers of 10 or more nm is likely to prevent the fillers from agglomerating, thus achieving the effect as a nucleating agent for foaming. This effect causes fine foaming, resulting in a flexible foamed PLA sheet. In addition, the filler is likely to disperse evenly, leading to uniform foaming to produce a flexible foamed PLA sheet. Moreover, the surface area is small, reducing the effect of increasing the stickiness so that sticky string does not readily occur. A volume average particle diameter of fillers of 200 or less $\mu$m makes the filler act as a nucleating agent for foaming, achieving fine foaming to obtain a flexible foamed PLA sheet. The filler sufficiently increases the stickiness, reducing bubble breakage so that the surface properties are improved. A filler having a volume average particle diameter of 10 nm to 200 $\mu$m enhances the surface texture of a foamed PLA sheet, making the foamed PLA sheet flexible.

The volume average particle diameter of the filler mentioned above can be measured with a laser diffraction/scattering particle size distribution measuring device (e.g., Partica LA-960, available from HORIBA, Ltd.).

The filler's proportion is not particularly limited and can be suitably selected to suit to a particular application. It is preferably from 0.2 to 5.5 percent by mass and more preferably from 0.3 to 5 percent by mass to the entire foamed PLA sheet. A proportion of the filler of 0.2 or more percent by mass achieves the effect as a nucleating agent for foaming, leading to fine foaming. A proportion of 5 or less percent by mass does not easily aggregate fillers, resulting in fine foaming. At an extreme proportion of the filler, the filler agglomerates in manufacturing a foamed PLA sheet, which makes it difficult for the filler to be present as primary particles in the foamed PLA sheet. A proportion of the filler of from 0.2 to 5.5 percent by mass thus promotes fine foaming, producing a foamed PLA sheet with excellent cushioning.

Additive

Examples of the additives include, but are not limited to, a heat stabilizer, an antioxidant, a coloring agent, an absorber for various light rays, an antistatic agent, a conductive material, and a plasticizer. These can be used alone or in combination.

There is no specific limitation to the content of the additive mentioned above, and it is suitably determined to a particular application. It is preferably from 2 or less percent by mass to the entire mass of the raw materials of the foamed PLA sheet. A proportion of the additive of 2 or less percent by mass enhances recyclability.

Method of Manufacturing Foamed PLA Sheet

A method of manufacturing a foamed sheet of the present disclosure includes melting, kneading, foaming, and other optional processes. These kneading and foaming can be executed simultaneously or separately.

The foamed PLA sheet can be preferably manufactured by an extrusion kneading molding method.

Melting

In the melting process, at least a PLA resin melts. If the raw materials of the foamed PLA sheet contain components other than the PLA resin, the PLA resin is mixed and melted with the components. In such a case, the melting process can also be referred to as a process of "raw material mixing and melting".

In the melting process, the PLA resin is melted by heating.

The heating temperature in the melting process, not particularly limited and can be suitably selected to suit to a particular application as long as the PLA resin is melted at the heating temperature. This heating temperature is preferably at least the lowest temperature below which the PLA resin is not melted. The PLA resin is melted by setting the heating temperature in the melting process to the lowest temperature below which the PLA resin is not melted. Mixing the PLA resin uniformly with a compressive fluid is thus possible in the subsequent kneading process.

Examples of the other components in the melting process include, but are not limited to, a filler and a foaming agent for enhancing the foaming efficiency. The other components, such as a cross-linking agent and various additives including thermal stabilizer, an antioxidant, a coloring agent, a conductive material, and a plasticizer, can be selected and added to suit to the purpose of an object molded from the foamed PLA sheet unless the components impair the effects of the present disclosure.

The filler, cross-linking agent, and additives mentioned above can be the same as those mentioned in Other Optional Components of Foamed PLA Sheet above. The descriptions thereof are thus omitted. The foaming agent is described in detail in Kneading, which is described later.

The PLA resin composition, a mixture of the PLA resin with the other optional components, or a mixture produced in the intermediate processes for obtaining a final product is also referred to as a PLA resin composition or master batch.

The PLA resin composition is a biodegradable resin that microorganisms can biodegrade. The composition is a carbon-neutral material and a low environmental impact polymer material, which is friendly to the environment. Moreover, the PLA resin or PLA as its material in the PLA resin composition is relatively inexpensive.

Cross-linking Agent

The proportion of the surfactant in the liquid is not particularly limited and can be suitably selected to suit to a particular application. For example, it is preferably from 0.5 to 2.5 percent by mass and more preferably from 0.5 to 1 percent by mass. A proportion of the cross-linking agent of 0.5 or more percent by mass can sufficiently seal the terminals of the PLA resin, which prevents hydrolysis, resulting in sufficient cross-linking. A proportion of the cross-linking agent of 2.5 or less percent by mass can prevent the extra cross-linking agent from reducing bubbling, which leads to decreasing the viscosity to enhance production stability. In addition, the proportion of the plant-derived resin (i.e., PLA resin) increases.

Kneading

The kneading process is to knead the PLA resin under the presence of a foaming agent to obtain a PLA resin composition. This kneading process is preferably carried out under the presence of a compressive fluid to obtain a PLA resin composition. The compressive fluid can efficiently promote foaming and kneading.

Foaming Agent

The foaming agent is not particularly limited and can be suitably selected to suit to a particular application.

Specific examples include, but are not limited to, hydrocarbons such as lower alkanes such as propane, n-butane, isobutane, n-pentane, isopentane, and hexane; ethers such as dimethyl ether; halogenated hydrocarbons such as methyl chloride and ethyl chloride; and physical foaming agents such as compressive gas such as carbon dioxide and nitrogen to obtain a foamed PLA sheet. These can be used alone or in combination. Of these, compressive gases such as carbon dioxide and nitrogen are preferable because they are odorless and less burden on the environment and can be handled with ease. Using a compressive fluid is more preferable.

Compressible Fluid

In general, a compressive fluid is known to plasticize resin, lowering the melt viscosity of the resin (Latest Application Technology on Super Critical Fluid, published by NTS Inc.). However, in the kneading process, in terms of dispersion, a PLA resin composition with a high melt viscosity is preferable to finely cut agglomerates by applying high shearing stress to the other components such as the filler.

For this reason, a decrease in the melt viscosity of the PLA resin composition due to the impregnation of a compressive fluid is inconsistent with the enhancement of the kneading properties. In kneading with a nucleating agent for foaming, pressure is applied without using a compressive fluid in some cases. Such kneading aims to increase the viscosity by diminishing the resin's free volume and increasing the interaction between the resin particles (refer to k.Yang.R.Ozisik R.Polymer, 47.2849 (2006)).

On this issue, the inventor of the present invention has investigated the possibility of using a compressive fluid in kneading the PLA resin composition with the other components, such as a cross-linking agent, and found that, under the presence of a compressive fluid, the viscosity of the PLA resin becomes suitable for kneading in a temperature range of the melting point minus 60 degrees C to the melting point plus 120 degrees C so that the other components such as the cross-linking agent are uniformly dispersed. According to the present disclosure, a PLA composition in a highly sticky state can be kneaded at temperatures lower than its melting point because of a compressive fluid, which enhances the dispersibility of the other components such as a cross-linking agent.

Some types of compressive fluids can act as foaming agents. The inventor of the present invention has found that a compressive fluid such as carbon dioxide or nitrogen can be a substitute for atypical foaming agent in producing a PLA resin foam made of the PLA resin composition. Using the compressive fluid as a foaming agent is preferable in terms of manufacturing because kneading and expanding can be executed in a series of processes to reduce the burden on the environment.

Specific examples of the substance usable in the state of the compressive fluid mentioned above include, but are not limited to, carbon monoxide, carbon dioxide, dinitrogen monoxide, nitrogen, methane, ethane, propane, 2, 3-dimethylbutane, ethylene, and dimethyl ether. These compressive fluids can be used alone or in combination. Of these, carbon dioxide is preferable because carbon dioxide is non-flammable and easy to handle and has a critical pressure of about 7.4 MPa and a critical temperature of about 31 degrees C, so supercritical carbon dioxide can readily be created.

The amount of the compressive fluid supplied to the raw material in a molten PLA resin composition is not particularly limited and can be suitably selected to suit to a particular application. This amount depends on the solubility of the compressive fluid in PLA, which varies with factors such as the temperature, the pressure, and the combination of the compressive fluid with the type of the PLA resin. If the PLA resin is used with carbon dioxide, the amount of carbon dioxide supplied is preferably 2 to 30 parts by mass to 100 parts by mass of the raw materials of the PLA resin composition. An amount of 2 or more parts by mass of carbon dioxide supplied to 100 parts by mass of the PLA resin avoids limiting plasticization of the PLA resin composition. An amount of 30 or more parts by mass of carbon dioxide supplied to 100 parts by mass of the PLA resin allows a uniform reaction without separating carbon dioxide from the PLA resin composition.

If carbon dioxide is used as the compressive fluid, the pressure is preferably 3.7 or more MPa, more preferably 5 or more MPa, and furthermore preferably its critical pressure, 7.4 or more Mpa, considering factors such as the reaction efficiency and the rate of polymer conversion. If carbon dioxide is used as a compressive fluid, its temperature is preferably 25 or higher degrees C for the same reason.

The concentration of the compressive fluid is not particularly limited and can be suitably selected to suit to a particular application in the present embodiment.

Foaming

The foaming process is to expand the foaming agent mentioned above and foaming the PLA resin composition to produce a foamed sheet with a bulk density of 0.250 or less $g/cm^3$, a melt viscosity of 5,000 to 30,000 Pa s at 190 degrees C, and a crystallinity of 35 or less percent as analyzed by differential scanning calorimetry.

This process preferably includes purging the PLA resin composition of the compressive fluid followed by forming the PLA resin composition to obtain a foamed sheet with a bulk density of 0.250 or less $g/cm^3$, a melt viscosity of 5,000 to 30,000 Pa·s at 190 degrees C, and a crystallinity of 35 or less percent as analyzed by differential scanning calorimetry.

If a foaming agent other than the compressive fluid mentioned above is used in the foaming process, the foaming agent expands to foam a PLA resin composition.

If a compressive fluid is used in the foaming process, the PLA resin composition expands upon the release of the pressure of the compressive fluid, removing the compressive fluid simultaneously.

The temperature in the foaming process is preferably within a range in which the PLA resin composition is sufficiently plasticized to be extruded.

As a force for driving a PLA resin composition to flow during the foaming process, it is possible to utilize the pressure from the kneading device used in the kneading process or provide a mechanical device such as a single- or multi-screw extruder or cylinder separately.

Other Optional Process

The other optional processes are not particularly limited and can be suitably selected to suit to a particular application as long as it is normally conducted for manufacturing a foamed plastic sheet. One optional process is molding into a sheet.

Molding

This molding includes, but is not limited to, vacuum forming, pressure forming, and press forming. A product obtained by molding can have a sheet-like form.

The mold material used in the molding process is not particularly limited and can be suitably selected to suit to a particular application.

Examples of the material include, but are not limited to, chromium-plated SCM440, S45C, S50C, SS400, SCM440, SUS316, SUS304, and materials equivalent to it. Of these, chromium-plated SCM440 is preferable.

The mold may be subjected to plating such as hard chromium plating to enhance durability.

Materials such as C2810, A5052, and alumina are also suitable to enhance thermal conductivity.

Silica glass can be selected for analysis. The mold can be finished with mirror polishing or blast finishing. Covering a mold with a releasing agent is also possible. Alternatively, using a mold with a variable structure is also possible.

Kneading Device

In the method of manufacturing a foamed PLA sheet, the mixing and melting process and the kneading process can be executed with a device such as a kneading device to produce the PLA resin composition mentioned above.

Kneading devices, or kneaders, for use in manufacturing a PLA resin composition may employ a continuous or batch process. Preferably, the process is chosen considering the device efficiency, product features, and product quality.

The kneaders are not particularly limited and include, but are not limited to, a single-screw extruder, a multi-screw extruder, a finisher, a kneader, a non-screw basket type stirring tank, a tubular polymerization tank equipped with a Vyborac available from Sumitomo Heavy Industries, Ltd., an N-SCR available from Mitsubishi Heavy Industries Ltd., a spectacle blade available from Hitachi, Ltd., a lattice blade or Kenics type or a Sulzer type SMLX static mixer. These devices support viscosity suitable for kneading. In terms of the color tone of a PLA resin composition, self-cleaning kneading devices such as a finisher, an N-SCR, a twin-screw extruder are preferable. In addition, taking into account properties such as color tone, stability, heat resistance, and shaping properties of a PLA resin composition, the kneader is preferably a finisher or an N-SCR. A single-screw or multi-screw extruder is particularly preferable to enhance kneadability and production efficiency.

Here, a continuous foamed sheet-forming device for executing the method of manufacturing a foamed PLA resin sheet is described with reference to the drawing. However, the continuous foamed sheet-forming device is not limited thereto.

As illustrated in the drawing, a continuous foamed sheet forming device 110 can be, for example, a twin-screw extruder (screw aperture 42mm, LID = 48, available from The Japan Steel Works, Ltd.). The continuous foamed sheet forming device 110 includes a raw material mixing and melting part a, a compressive fluid supplying part b, a kneading part c, an extrusion molding part d, and other optional parts. A compressive fluid supply tank 3 supplies a compressive fluid (liquid material) with a measuring cup. A first supply unit 1 and a second supply unit 2 supply pellets of a PLA resin composition and solid raw material such as a filler with a constant feeder. A PLA resin composition is thus manufactured.

Raw Material Mixing and Melting Part a

The raw material mixing and melting part a heats resin pellets of the PLA resin composition or mixes and heats the resin pellets with other components such as a filler. The heating temperature set to the melting point of the PLA resin or higher than that makes the PLA resin ready for mixing with a compressive fluid uniformly at the compressive fluid supplying part b.

Compressive Fluid Supplying Part b

The resin pellets are melted and fused by heating. Optionally, the filler is wetted and compressible fluid is supplied to plasticize the molten resin with the wet filler.

Kneading Part c and Extrusion Molding Part d

The temperature of the kneading part c is set to achieve a viscosity suitable for kneading the PLA resin composition and the other optional components such as the filler.

This temperature is not particularly limited because it varies depending on factors such as the specifications of a reaction device and the type, structure, and molecular weight of a resin.

For procurable PLA resin with a weight average molecular weight (Mw) of about 200,000, kneading is normally conducted at a temperature range of from the melting point of PLA ± 10 degrees C to that ± 20 degrees C. This setting is to sufficiently dissolve the compressive fluid in the PLA resin or allow the PLA resin with a cross-linking agent. On the other hand, the PLA resin plasticized by the compressive fluid can be kneaded at the extrusion molding part d at a temperature lower than the melting point of the PLA resin. The compressive fluid is eluted from the resin at the outlet of the mold at the tip of an extruder, increasing the viscosity of the PLA resin so a foamed sheet with a high expansion ratio can be produced.

Specific temperatures set lower than the melting point of the PLA at the extrusion molding part d is preferably from a temperature of 80 degrees C lower than the melting point of the PLA resin to a temperature of 10 degrees C lower than that and more preferably a temperature of 60 degrees C lower than the melting point of the PLA resin to a temperature of 30 degrees C lower than that. The temperature can be set based on the current value of the stirring power of the kneading device mentioned above for convenience.

The PLA resin composition is discharged from a mold 4 attached to the tip of the extrusion molding part d and extruded and foamed by purging the PLA resin composition of the compressive fluid to obtain a foamed PLA sheet extruded and foamed from the mold 4.

Product

In one embodiment of the present disclosure, the product contains the foamed PLA sheet of the present disclosure. This product can be manufactured from the foamed PLA sheet of the present disclosure. Alternatively, the product may optionally contain other components.

Another embodiment of the product of the present disclosure is molded from the foamed PLA sheet of the present disclosure and may optionally contain other components.

The other components are not particularly limited as long as they can be used in a typical resin product and can be suitably selected to suit to a particular application.

Examples of the product according to one embodiment (also referred to as a "consumable material") include household goods such as bags, packaging containers, trays, tableware, cutlery, stationery, and cushioning materials. This product conceptually includes an intermediate product such as an original fabric with a roll-like form of the foamed PLA sheet, a part like the handle of a tray, and a product such as a tray with a handle, in addition to the product itself.

Specific examples of the bags include, but are not limited to, a shopping bag, a plastic carrier bag, and a garbage bag.

Specific examples of the stationery include, but are not limited to, a plastic transparent file folder and a patch.

In addition, the product can be widely used as a sheet or a packaging material for anything like industrial materials, daily commodities, agricultural commodities, foods, pharmaceuticals, and cosmetics, in addition to the consumable material mentioned above.

The product, which contains the foamed PLA sheet of the present disclosure or is obtained by molding the foamed PLA sheet of the present disclosure, is particularly suitably used as a cushioning material because the product has a high expansion ratio and excellent cushioning properties, flexibility, and surface properties.

The method of producing a product obtained by molding the polylactic acid foam sheet is not particularly limited as long as the foamed PLA sheet of the present disclosure is used as a raw material. The method includes molding the foamed PLA sheet of the present disclosure into a desired shape and other optional processes.

Some of the products may not maintain the shape and properties but are within the scope of the present invention as long as they use the foamed PLA sheet as a raw material.

The terms of image forming, recording, and printing in the present disclosure represent the same meaning.

Also, recording media, media, and print substrates in the present disclosure have the same meaning unless otherwise specified.

Having generally described preferred embodiments of this disclosure, further understanding can be obtained by reference to certain specific examples which are provided herein for the purpose of illustration only and are not intended to be limiting. In the descriptions in the following examples, the numbers represent weight ratios in parts, unless otherwise specified.

EXAMPLES

Next, the present disclosure is described in detail with reference to Examples and Comparative Examples but is not limited thereto. In the following Examples and Comparative Examples, "percent" represents "percent by mass" unless otherwise specified.

Example 1

Raw Material Mixing and Melting

Using the continuous foamed sheet forming device 110 illustrated in FIG. 1, 1 percent by mass of a cross-linking agent (Metablen® P-1901, available from Mitsubishi Chemical Corporation) was admixed with 99 percent by mass of a PLA resin (Revode190, optical purity of 98.5 percent, available from Zhejiang Hisun Biomaterials Co., Ltd.) with a Henschel mixer (FM75, available from NIPPON COKE & ENGINEERING CO., LTD.) at 1,500 rpm for 5 minutes. Thereafter, the first supply unit 1 supplied the mixture to the raw material mixing and melting part a of a first extruder A at a rate of flow of 20 kg/hour.

Kneading

Next, the compressive fluid supply unit 3 supplied carbon dioxide as a compressive fluid at 7.5 percent by mass to PLA resin at a rate of flow of 1.5 kg/hour to the compressive fluid supplying part b of the first extruder A. The mixture was mixed and melt-kneaded with carbon dioxide at the kneading part c of the first extruder A and supplied to a second extruder B.

Extrusion Molding

The resulting mixture was supplied to and kneaded at the extrusion molding part d of the second extruder B to obtain a PLA resin composition.

Foaming

The PLA resin composition obtained was discharged from the mold 4 attached to the tip of the second extruder B at a rate of discharging of 20 kg/hour. The PLA resin composition was extruded and foamed from the mold 4 by purging the PLA resin composition of the compressive fluid to obtain foamed sheet 1.

At this point, the temperature of the mold 4 was adjusted to 140 degrees C, while the pressure at the tip of the extrusion molding part d of the second extruder B was adjusted to 30 MPa for the clearance for the tip of the flow path of the mold 4.

In Example 1, the temperature conditions of each part were as follows.

- Raw material mixing and melting part a of the first extruder A: 170 degrees C
- Compressive fluid supplying part b of the first extruder A: 170 degrees C
- Kneading part c of the first extruder A: 170 degrees C
- Extrusion molding part d of the second extruder B: 160 degrees C

Example 2

A foamed sheet 2 of Example 2 was obtained in the same manner as in Example 1 except that the temperature of the kneading part c of the first extruder A was changed from 170 to 190 degrees C in the kneading process of Example 1.

Example 3

A foamed sheet 3 of Example 3 was obtained in the same manner as in Example 1 except that the temperature of the extrusion molding part d of the second extruder B was changed from 160 to 155 degrees C and the temperature at the mold was changed from 140 to 137 degrees C in the foaming process of Example 1.

Example 4

A foamed sheet 4 of Example 4 was obtained in the same manner as in Example 1 except that the temperature of the mold was changed from 140 to 148 degrees C in the foaming process of Example 1.

Example 5

A foamed sheet 5 of Example 5 was obtained in the same manner as in Example 1 except that the temperature of the extrusion molding part d of the second extruder B was changed from 160 to 150 degrees C and the temperature at the mold was changed from 140 to 143 degrees C in the foaming process of Example 1.

Example 6

A foamed sheet 6 of Example 6 was obtained in the same manner as in Example 1 except that the amount of carbon dioxide as a compressive fluid was changed from 7.5 to 8.5 percent by mass to the PLA resin in the kneading process of Example 1.

Example 7

A foamed sheet 7 of Example 7 was obtained in the same manner as in Example 1 except that the amount of carbon dioxide as a compressive fluid was changed from 7.5 to 6.0 percent by mass to the PLA resin in the kneading process of Example 1.

Example 8

A foamed sheet 8 of Example 8 was obtained in the same manner as in Example 1 except that the PLA resin (Revode190, optical purity of 98.5 percent, available from Zhejiang Hisun Biomaterials Co., Ltd.) as the raw material was changed to a PLA resin (Revode110, optical purity of 96.5 percent, available from Zhejiang Hisun Biomaterials Co., Ltd.) in the raw materials mixing and melting process of Example 1.

Example 9

A foamed sheet 9 of Example 9 was obtained in the same manner as in Example 1 except that the raw material mixing and melting process of Example 1 was changed to the following.

Raw Material Mixing and Melting

Using the continuous foamed sheet forming device 110 illustrated in the drawing, 1 percent by mass of a cross-linking agent (Metablen® P-1901, available from Mitsubishi Chemical Corporation) and 1 percent by mass of cellulose nanofiber (fiber width of 4 nm × fiber length of 1 $\mu$m, available from DAIO PAPER CORPORATION) were admixed with 98 percent by mass of PLA resin (Revode 190, optical purity of 98.5 percent, available from Zhejiang Hisun Biomaterials Co., Ltd.) with a Henschel mixer (FM75, available from NIPPON COKE & ENGINEERING CO., LTD.) at 1,500 rpm for 5 minutes. Thereafter, the first supply unit 1 supplied the mixture to the raw material mixing and melting part a of the first extruder A at a rate of flow of 20 kg/hour.

Example 10

A foamed sheet 10 of Example 10 was obtained in the same manner as in Example 9 except that 1 percent by mass of cellulose nanofiber (fiber width of 4 nm × fiber length of 1 $\mu$m, available from DAIO PAPER CORPORATION) was changed to 1 percent by mass of fumed silica (AEROSIL™, R972, volume-average particle diameter of 16 nm, available from Nippon Aerosil Co., Ltd.) in the raw material mixing and melting process of Example 9.

Example 11

A foamed sheet 11 of Example 11 was obtained in the same manner as in Example 9 except that 1 percent by mass of cellulose nanofiber (fiber width of 4 nm × fiber length of 1 $\mu$m, available from DAIO PAPER CORPORATION) was changed to 1 percent by mass of mica (M-60, volume average particle diameter of 160 $\mu$m, available from Repco Inc.) in the raw material mixing and melting process of Example 9.

Example 12

A foamed sheet 11 of Example 11 was obtained in the same manner as in Example 9 except that 1 percent by mass of cellulose nanofiber (fiber width of 4 nm × fiber length of 1 $\mu$m, available from DAIO PAPER CORPORATION) was changed to 1 percent by mass of mica (M-XF, volume average particle diameter of 4 $\mu$m, available from Repco Inc.) in the raw material mixing and melting process of Example 9.

Example 13

A foamed sheet 13 of Example 13 was obtained in the same manner as in Example 9 except that 1 percent by mass of cellulose nanofiber (fiber width of 4 nm × fiber length of 1 μm, available from DAIO PAPER CORPORATION) was changed to 1 percent by mass of mica (Suzorite™, 150-NY, volume average particle diameter of 90 μm, available from TOMOE Engineering Co., Ltd.) in the raw material mixing and melting process of Example 9.

Example 14

A foamed sheet 14 of Example 14 was obtained in the same manner as in Example 1 except that the raw material mixing and melting process of Example 1 was changed to the following.

Raw Material Mixing and Melting

Using the continuous foamed sheet forming device 110 illustrated in the drawing, 1 percent by mass of a cross-linking agent (Metablen® P-1901, available from Mitsubishi Chemical Corporation) and 0.2 percent by mass of mica (M-400, volume average particle diameter of 24 μm, available from Repco Inc.) were admixed with 98.8 percent by mass of PLA resin (Revode190, optical purity of 98.5 percent, available from Zhejiang Hisun Biomaterials Co., Ltd.) with a Henschel mixer (FM75, available from NIPPON COKE & ENGINEERING CO., LTD.) at 1,500 rpm for 5 minutes. Thereafter, the first supply unit 1 supplied the mixture to the raw material mixing and melting part a of the first extruder A at a rate of flow of 20 kg/hour.

Example 15

A foamed sheet 15 of Example 15 was obtained in the same manner as in Example 14 except that the amount of PLA resin (Revode 190, optical purity of 98.5 percent, available from Zhejiang Hisun Biomaterials Co., Ltd.) added was changed from 98.8 to 98.7 percent by mass and the amount of mica (M-400, volume-average particle diameter of 24 μm, available from Repco Inc.) was changed from 0.2 to 0.3 percent by mass in the raw material mixing and melting process of Example 14.

Example 16

A foamed sheet 16 of Example 16 was obtained in the same manner as in Example 14 except that the amount of PLA resin (Revode 190, optical purity of 98.5 percent, available from Zhejiang Hisun Biomaterials Co., Ltd.) added was changed from 98.8 to 94 percent by mass and the amount of mica (M-400, volume-average particle diameter of 24 μm, available from Repco Inc.) was changed from 0.2 to 5 percent by mass in the raw material mixing and melting process of Example 14.

Example 17

A foamed sheet 16 of Example 16 was obtained in the same manner as in Example 14 except that the amount of PLA resin (Revode 190, optical purity of 98.5 percent, available from Zhejiang Hisun Biomaterials Co., Ltd.) added was changed from 98.8 to 93.8 percent by mass and the amount of mica (M-400, volume-average particle diameter of 24 μm, available from Repco Inc.) was changed from 0.2 to 5.2 percent by mass in the raw material mixing and melting process of Example 14.

Example 18

A foamed sheet 18 of Example 18 was obtained in the same manner as in Example 1 except that the clearance at the tip of the flow path of the mold was adjusted to change a pressure of 30 MPa at the end of the extrusion molding part d of the second extruder B in the foaming process of Example 1 to a pressure of 33.5 MPa.

Example 19

A foamed sheet 19 of Example 19 was obtained in the same manner as in Example 1 except that the clearance at the tip of the flow path of the mold was adjusted to change a pressure of 30 MPa at the end of the extrusion molding part d of the second extruder B in the foaming process of Example 1 to a pressure of 32 MPa.

Example 20

A foamed sheet 20 of Example 20 was obtained in the same manner as in Example 1 except that the clearance at the tip of the flow path of the mold was adjusted to change a pressure of 30 MPa at the end of the extrusion molding part d of the second extruder B in the foaming process of Example 1 to a pressure of 27 MPa.

Example 21

A foamed sheet 21 of Example 21 was obtained in the same manner as in Example 1 except that the clearance at the tip of the flow path of the mold was adjusted to change a pressure of 30 MPa at the end of the extrusion molding part d of the second extruder B in the foaming process of Example 1 to a pressure of 25 MPa.

Comparative Example 1

A foamed sheet 22 of Comparative Example 1 was obtained in the same manner as in Example 1 except that the temperature of the kneading part c of the first extruder A was changed from 170 to 155 degrees C in the kneading process of Example 1.

Comparative Example 2

A foamed sheet 23 of Comparative Example 2 was obtained in the same manner as in Example 1 except that the temperature of the kneading part c of the first extruder A was changed from 170 to 200 degrees C in the kneading process of Example 1.

Comparative Example 3

A foamed sheet 24 of Comparative Example 3 was obtained in the same manner as in Example 1 except that the temperature of the extrusion part d of the second extruder B was changed from 160 to 180 degrees C and the temperature at the mold was changed from 140 to 136 degrees C in the foaming process of Example 1.

Comparative Example 4

A foamed sheet 25 of Comparative Example 4 was obtained in the same manner as in Example 1 except that the temperature of the mold was changed from 140 to 153 degrees C in the foaming process of Example 1.

Evaluation on Property

The bulk density, crystallinity, average foam diameter, thickness, ratio of closed cell foam, and melt viscosity of the foamed sheets 1 to 25 obtained in Examples 1 to 21 and Comparative Examples 1 to 4 were measured by the following methods. The results are shown in Table 1 below.

Measuring Bulk Density

The bulk density of the foamed sheets 1 to 25 of Examples 1 to 21 and Comparative Examples 1 to 4 were measured in the following manner.
The foamed sheet was cut to a size of a length of 1 cm and a width of 2.5 cm was determined as a measuring sample. The mass W (g) of the sample was measured. Subsequently, the volume of the sample in water was measured. Specifically, 8 mL of pure water was poured into a 10 mL measuring cylinder. The measuring sample after the mass W measurement was put into the measuring cylinder, and the increased volume V of the measuring cylinder was read. Based on the scale up to 0.1 mL, the increment was read in 0.01 mL. At this point, mL was converted into $cm^3$. The bulk density D ($g/cm^3$) of the measuring sample was calculated according to the following Relationship 1.

$$\text{Bulk density D } (g/cm^3) = \text{mass W } (g) \, / \, \text{volume } (V/cm^3) \qquad \text{Relationship 1}$$

Analyzing Crystallinity

The crystallinity of the foamed sheets 1 to 25 of Examples 1 to 21 and Comparative Examples 1 to 4 were analyzed in the following manner.

The crystal melting peak area and the cold crystallization peak area of the foamed sheets obtained in Examples 1 to 21 and Comparative Examples 1 to 4 were determined in accordance with JIS K 7122-1987 (testing method for heat of transfer of plastics) format. Differential scanning calorimetry (DSC) was carried out with a differential scanning calorimeter, Q-2000 (available from TA Instruments), under the following measuring conditions. The area corresponding to the exothermic peak around a temperature range of about 80 to about 110 degrees Celsius during the temperature rising stage was determined as the cold crystallization peak area, while the area corresponding to the endothermic peak at the temperatures higher than the temperature range was determined as the crystal melting peak area. Crystallinity was calculated according to the following relationship 3.

Measuring Conditions

- Content of sample: 5 to 10 mg
- Temperature range of measuring: 10 to 200 degrees Celsius
- Rate of temperature rising: 10 degrees Celsius/min
- Purge gas: nitrogen
- Rate of flowing of purge gas: 50 mL/min

$$\text{Crystallinity (percent)} = \{\text{crystal melting peak area (J/g)} - \text{cold crystallization peak area (J/g)}\} / 93 \text{ (J/g)} \times 100 \text{ (percent)} \qquad \text{Relationship 3}$$

Analyzing Average Foam Diameter

The average foam diameter of the foamed sheets 1 to 25 of Examples 1 to 21 and Comparative Examples 1 to 4 were analyzed in the following manner.

A foamed PLA sheet was cut with a razor to expose its cross section to be observed along the thickness direction. This cross section to be observed was shot with a real surface view microscope, VE 7800, available from KEYENCE CORPORATION, with a magnifying power of 300 to 1,000. The photo obtained was binarized into the white component corresponding to bubbles (void) and the black component corresponding to the resin portion with a software called Image-J. The image binarized was subjected to particle analysis using the software mentioned above to calculate the equivalent circle diameter of individual bubbles (voids). Based on this calculation result, the median diameter D50 was calculated and determined as the average foam diameter.

Measuring Thickness of Sheet

The thickness (average thickness) of the foamed sheets 1 to 25 of Examples 1 to 21 and Comparative Examples 1 to 4 were measured in the following manner.

The foamed sheet with a length of 1 cm and a width of 2.5 cm was cut along the traverse direction (TD) into 11 pieces, each spaced equally therebetween, creating measuring samples. A glass slide was placed on a smooth board. A terminal was placed on the glass slide for zero adjustment with a digimatic indicator (ID-C112AX, available from Mitutoyo Corporation). The 11 measuring samples were pinched between the board and the glass slide to measure the samples' thickness. The found values of the 11 measuring samples were averaged to obtain the average thickness.

Analyzing Closed Cell Foam

The closed cell foam ratio of the foamed sheets 1 to 25 of Examples 1 to 21 and Comparative Examples 1 to 4 were analyzed according to the ASTM D2856 format.

Specifically, 25 mm square foamed sheets were stacked to form two 25 mm cubes used as measuring samples. The volume Vg of these samples was measured with a caliper. The measuring samples were measured with a dry automatic densimeter (AccuPyc 1330, available from Shimadzu Corporation) to obtain Volume Vp1 of the sample.

Each of the two cubes was then equally divided into eight. The resulting 16 samples are measured with the dry automatic densimeter (AccuPyc 1330) to obtain Volume Vp2 of the sample.

The ratio of closed cell foams in a polylactic acid foam sheet was calculated from the relationship below according to ASTM D2856 format.

Vp1 and Vp2, the volume data obtained at measuring, are expressed as Relationship 4 and Relationship 5 below, where Voc represents the volume of an open cell foam of the measuring sample and Vcc represents the volume of the foams released in the preparation of the measuring samples.

$$Vp1 = Vg - Voc - Vcc \qquad \text{Relationship 4}$$

$$Vp2 = Vg - Voc - 2Vcc \qquad \text{Relationship 5}$$

From Relationships 4 and 5, the volume Voc of the open cell foam of the measuring sample is represented by Relationship 6 below.

$$Voc = Vg - 2Vp1 + Vp2 \qquad \text{Relationship 6}$$

In the case that Wpl represents the mass of a PLA resin, Wpe represents the mass of polyethylene, the true density of the PLA resin is 1.25, and the true density of polyethylene is 0.92, Volume Vc of closed cell foams alone is represented by Relationship 7 below and the ratio of closed cell foam Vcc is calculated from Relationship 8 below.

$$Vc = Vg - (Wp1/1.25 + Wpe/0.92) - Voc \qquad \text{Relationship 7}$$

$$Vcc = Vc/Vg \times 100 \text{ percent} \qquad \text{Relationship 8}$$

Measuring Melt Viscosity

The melt viscosity of the foamed sheets 1 to 25 of Examples 1 to 21 and Comparative Examples 1 to 4 were measured in the following manner.
The foamed sheet dried at 80 degrees C for 2 or more hours was measured by a flow tester under the following measuring conditions.

Measuring Conditions

· Flow tester: CFT-100D, available from Shimadzu Corporation
· Test temperature: 190 degrees C
· Measuring mode: constant temperature method
· Nozzle dimension: diameter of 1 mm with length of 10 mm

Evaluation

The foamed sheets 1 to 25 obtained in Examples 1 to 21 and Comparative Examples 1 to 4 were evaluated for cushioning, flexibility, wrapping followability, and surface properties by the following methods, and comprehensive evaluation was performed based on these. The results are shown in Table 2.

Analyzing Cushioning

The cushioning of the foamed sheets 1 to 25 of Examples 1 to 21 and Comparative Examples 1 to 4 were evaluated according to JIS 0235:2002 format.
Specifically, the foamed sheet was punched into a circular shape with a diameter of 5cm with a punching device and a punching die (diameter of 5cm). The foamed sheets stacked up to a thickness surpassing 25mm were punched out and used as a measuring sample. Next, a 5kN load cell was mounted onto a universal tester (Autograph AGS-X, available from Shimadzu Corporation). Next, after calibration was carried out at a compression amount of 60 percent, the sheets were cut to have a diameter of 5 cm and overlapped on each other up to a thickness of 25 mm ± 3 mm. The stacked sheets were used as a measuring sample, which was placed onto the universal tester to start measuring. A graph of the compression stress and the buffer coefficient was plotted, the buffer coefficient at a compression stress of 0.1 MPa was calculated, and the buffer property was evaluated according to the following evaluation criteria.

Evaluation Criteria on Cushioning

S: Buffer factor was less than 6.0
A: Buffer factor was 6.0 to less than 7.0
B: Buffer factor was 7.0 to less than 8.0
C: Buffer factor was 8.0 or greater

Analyzing Flexibility

The flexibility of the foamed sheets 1 to 25 of Examples 1 to 21 and Comparative Examples 1 to 4 were evaluated in the following manner.
Three experts checked the degree of resistance to bending the foamed sheet lightly with both ends of the foamed sheet held in the MD direction (longitudinal direction, flow direction) and the TD direction (traverse direction, direction perpendicular to the MD direction) of the foamed sheet, followed by evaluating the degree of resistance according to the following evaluation criteria. The evaluation results by the three experts were averaged for the evaluation.

Evaluation Criteria on Flexibility

3 points: flexible with no resistance
2 points: slightly stiff with a slight resistance
1 point: stiff with a resistance

Determination Criteria on Flexibility

A: The average point is from 2.5 to 3.0
B: The average point is from 1.5 to less than 2.5
C: The average point is less than 1.5

Analysis on Wrapping Followability

The wrapping followability of the foamed sheets 1 to 25 of Examples 1 to 21 and Comparative Examples 1 to 4 were evaluated in the following manner.
The foamed sheet was wound around a cylindrical vessel with a diameter of 6 cm in the MD direction and the TD direction. Three experts made a visual inspection and evaluated the followability to the vessel according to the following evaluation criteria. The evaluation results by the three experts were averaged for the evaluation.

Evaluation Criteria on Wrapping Followability

3 points: appressed against cylinder without a gap
2 points: bent at one point in either MD or TD direction with a gap
1 point: bent at multiple points with gaps

Determination Criteria on Wrapping Followability

A: The average point is from 2.5 to 3.0

B: The average point is from 1.5 to less than 2.5
C: The average point is less than 1.5

Analyzing Surface Property

The surface properties of the foamed sheets 1 to 25 of Examples 1 to 21 and Comparative Examples 1 to 4 were evaluated in the following manner.

The foamed sheet was cut to the A4 size and determined as a sample for evaluation. This sample was fixed on a desk. Three experts each pushed his palm back and forth multiple times against the surface of the foamed sheet and checked the degree of bumpiness and scratches of the foamed sheet, followed by evaluation on the following evaluation criteria. The evaluation results by the three experts were averaged for the evaluation.

Evaluation Criteria on Surface Property

3 points: felt soft without irregularities and scratches
2 points: felt slight irregularities and scratches
1 point: felt irregularities and scratches or hard grains

Determination Criteria on Surface Property

A: The average point is from 2.5 to 3.0
B: The average point is from 1.5 to less than 2.5
C: The average point is less than 1.5

Comprehensive Evaluation

Based on the evaluations on cushioning, flexibility, wrapping followability, and surface properties, a comprehensive evaluation was made to the foamed sheets 1 to 25 obtained in Examples 1 to 21 and Comparative Examples 1 to 4 according to the following evaluation criteria.

Evaluation Criteria on Comprehensive Evaluation

S: S or A on every evaluation without B or C
A: S or A on every evaluation except for a B
B: S or A on every evaluation except for two or three B's
C: at least one C

Table 1

| | Melt Viscosity (Pa·s) | Crystallinity (percent) | Bulk density (g/cm$^3$) | foam diameter ($\mu$m) | Ratio (percent) of closed cell foam | Optical purity (percent) |
|---|---|---|---|---|---|---|
| Example 1 | 5,500 | 32.1 | 0.080 | 450 | 29 | 98.5 |
| Example 2 | 27,500 | 31.2 | 0.063 | 250 | 48 | 98.5 |
| Example 3 | 7,500 | 34.5 | 0.073 | 510 | 33 | 98.5 |
| Example 4 | 6,500 | 33.8 | 0.220 | 550 | 43 | 98.5 |
| Example 5 | 15,000 | 27.6 | 0.065 | 400 | 26 | 98.5 |
| Example 6 | 19,000 | 24.6 | 0.059 | 230 | 46 | 98.5 |

(continued)

| | MeltViscosity (Pa·s) | Crystallinity (percent) | Bulk density (g/cm³) | foam diameter (μm) | Ratio (percent) of closed cell foam | Optical purity (percent) |
|---|---|---|---|---|---|---|
| Example 7 | 21,000 | 23.5 | 0.065 | 480 | 55 | 98.5 |
| Example 8 | 22,000 | 24.3 | 0.055 | 275 | 41 | 96.5 |
| Example 9 | 9,800 | 23.8 | 0.200 | 480 | 31 | 98.5 |
| Example 10 | 23,000 | 32.3 | 0.065 | 270 | 45 | 98.5 |
| Example 11 | 10,200 | 24.2 | 0.083 | 410 | 33 | 98.5 |
| Example 12 | 22,000 | 29.3 | 0.058 | 270 | 42 | 98.5 |
| Example 13 | 11,500 | 21.6 | 0.086 | 450 | 30 | 98.5 |
| Example 14 | 9,800 | 24.1 | 0.091 | 550 | 35 | 98.5 |
| Example 15 | 12,000 | 24.6 | 0.082 | 490 | 33 | 98.5 |
| Example 16 | 22,500 | 30.3 | 0.055 | 285 | 48 | 98.5 |
| Example 17 | 24,200 | 32.1 | 0.053 | 280 | 48 | 98.5 |
| Example 18 | 13,000 | 32.3 | 0.070 | 440 | 35 | 98.5 |
| Example 19 | 14,000 | 30.5 | 0.067 | 435 | 37 | 98.5 |
| Example 20 | 16,000 | 25.4 | 0.062 | 380 | 41 | 98.5 |
| Example 21 | 17,000 | 24.2 | 0.060 | 370 | 42 | 98.5 |
| Comparative Example 1 | 4,500 | 32.5 | 0.082 | 520 | 24 | 98.5 |
| Comparative Example 2 | 32,000 | 30.8 | 0.059 | 220 | 51 | 98.5 |
| Comparative Example 3 | 7,500 | 35.3 | 0.076 | 510 | 28 | 98.5 |
| Comparative Example 4 | 6,500 | 33.8 | 0.270 | 550 | 33 | 98.5 |

| | Filler | | | Average thickness (mm) of sheet |
|---|---|---|---|---|
| | Type | Volume average particle diameter | Amount added (percent by mass) | |
| Example 1 | - | - | - | 0.92 |
| Example 2 | - | - | - | 1.22 |
| Example 3 | - | - | - | 0.89 |
| Example 4 | - | - | - | 0.85 |
| Example 5 | - | - | - | 1.02 |
| Example 6 | - | - | - | 1.16 |
| Example 7 | - | - | - | 1.14 |
| Example 8 | - | - | - | 1.02 |
| Example 9 | CNF [*1] | 4 nm × 1 μm [*7] | 1 | 0.92 |
| Example 10 | R972 [*2] | 16 nm | 1 | 0.95 |

(continued)

| | Filler | | | Average thickness (mm) of sheet |
|---|---|---|---|---|
| | Type | Volume average particle diameter | Amount added (percent by mass) | |
| Example 11 | M-60 (*3) | 160 μm | 1 | 1.02 |
| Example 12 | M-XF (*4) | 4 μm | 1 | 1.31 |
| Example 13 | Suzorite 150-NY (※ 5) | 90 μm | 1 | 1.02 |
| Example 14 | M-400 (*6) | 24 μm | 0.2 | 0.98 |
| Example 15 | M-400 (*6) | 24 μm | 0.3 | 1.02 |
| Example 16 | M-400 (*6) | 24 μm | 5.0 | 1.11 |
| Example 17 | M-400 (*6) | 24 μm | 5.2 | 1.22 |
| Example 18 | - | - | - | 0.41 |
| Example 19 | - | - | - | 0.52 |
| Example 20 | - | - | - | 1.51 |
| Example 21 | - | - | - | 1.58 |
| Comparative Example 1 | - | - | - | 0.88 |
| Comparative Example 2 | - | - | - | 1.42 |
| Comparative Example 3 | - | - | - | 1.02 |
| Comparative Example 4 | - | - | - | 1.13 |

Details of the fillers in Table 1 are as follows.

(*1) CNF: Cellulose nanofiber (fiber width of 4 nm × fiber length of 1 μm, available from Daio Paper Corporation (*2) R972: fumed silica (AERORIL®) R972, volume average particle diameter of 16 nm, available from Nippon Aerosil Co., Ltd.

(*3) M-60: Mica (M-60, volume average particle diameter of 160 μm, available from Repco Inc.

(*4) M-XF: Mica (M-XF, volume average particle diameter of 4 μm, available from Repco Inc.

(*5) Suzorite 150-NY: Mica (Suzorite® 150-NY, volume average particle diameter of 90 μm, available from Nippon Aerosil Co., Ltd.)

(*6) M-400: Mica (M-400, volume average particle diameter of 24 μm, available from Repco Inc.

(7*) Regarding CNF, as mentioned above, represented by fiber width of 4 nm × fiber length of 1 μm instead of volume average particle diameter.

Table 2

| | Cushioning | | Flexibility | Wrapping followability | Surface property | Total evaluation |
|---|---|---|---|---|---|---|
| | Cushion factor | Evaluation | | | | |
| Example 1 | 7.5 | B | A | A | B | B |
| Example 2 | 6.8 | A | A | A | B | A |
| Example 3 | 6.6 | A | B | B | A | B |
| Example 4 | 7.7 | B | A | A | A | A |

(continued)

| | Cushioning | | Flexibility | Wrapping followability | Surface property | Total evaluation |
|---|---|---|---|---|---|---|
| | Cushion factor | Evaluation | | | | |
| Example 5 | 6.7 | A | A | A | A | S |
| Example 6 | 6.9 | A | A | A | A | S |
| Example 7 | 5.8 | S | A | A | A | S |
| Example 8 | 6.6 | A | A | A | A | S |
| Example 9 | 6.4 | A | A | A | A | S |
| Example 10 | 6.1 | A | A | A | A | S |
| Example 11 | 6.2 | A | A | A | A | S |
| Example 12 | 5.1 | S | A | A | B | A |
| Example 13 | 5.5 | S | A | A | A | S |
| Example 14 | 6.1 | A | A | A | A | S |
| Example 15 | 5.9 | S | A | A | A | S |
| Example 16 | 5.1 | S | A | A | A | S |
| Example 17 | 4.8 | S | A | A | B | A |
| Example 18 | 7.5 | B | A | A | A | A |
| Example 19 | 6.9 | A | A | A | A | S |
| Example 20 | 6.2 | A | A | A | A | S |
| Example 21 | 6.0 | A | A | B | A | A |
| Comparative Example 1 | 8.4 | C | A | A | C | C |
| Comparative Example 2 | 6.5 | A | C | C | C | C |
| Comparative Example 3 | 6.8 | A | C | C | B | C |
| Comparative Example 4 | 8.6 | C | A | A | A | C |

Aspects of the present disclosure include, but are not limited to the following:

Aspect 1. A foamed PLA sheet contains a PLA resin, wherein the foamed PLA sheet has a bulk density of 0.250 or less g/cm$^3$, the foamed PLA sheet has a melt viscosity of 5,000 to 30,000 Pa s at 190 degrees Celsius, the foamed PLA sheet has a crystallinity of 35 less percent as analyzed by differential scanning calorimetry.
Aspect 2. The foamed PLA sheet according to the aspect 1, wherein the crystallinity is 30 or less percent.
Aspect 3. The foamed PLA sheet according to the aspects 1 or 2 mentioned above, having a forming diameter of 300 or less $\mu$m.
Aspect 4. The foamed PLA sheet according to any one of the aspects 1 to 3 mentioned above, having a closed cell foam ratio of 50 or more percent.
Aspect 5. The foamed PLA sheet according to any one of 1 to 4 mentioned above wherein PLA of the PLA resin has an optical purity of 99 or less percent.
Aspect 6. The ink according to any one of the aspects 1 to 5 mentioned above, further contains a filler.
Aspect 7. The foamed PLA sheet according to the aspect 6 mentioned above, wherein the filler contains mica.
Aspect 8. The foamed PLA sheet according to the aspect 6 or 7, wherein the filler has a volume average particle diameter of 0.1 to 100 $\mu$m.
Aspect 9. The foamed PLA sheet according to any one of aspects 6 to 8, wherein the filler accounts for 0.3 to 5 percent by mass of the foamed PLA sheet.

Aspect 10. The foamed PLA sheet according to any one of Aspects 1 to 9, having a thickness of 0.5 to 1.55 mm.

Aspect 11. A method of manufacturing a foamed PLA sheet includes melting a PLA resin, kneading the PLA resin under a presence of a compressive fluid to obtain a PLA resin composition, purging the PLA resin composition of the compressive fluid, and expanding the PLA resin composition to obtain the foamed PLA sheet with a bulk density of 0.250 or less g/cm$^3$, a melt viscosity of 5,000 to 30,000 Pa·s at 190 degrees C, and a crystallinity of 35 or less percent as analyzed by differential scanning calorimetry.

Aspect 12. A product contains the foamed PLA sheet of any one of the aspects of 1 to 10.

Aspect 13. A product molded from the foamed PLA sheet of any one of the aspects of 1 to 10.

Aspect 14. A method of manufacturing a product includes molding the foamed PLA sheet of any one of the aspects of 1 to 10.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

**Claims**

1.  A foamed polylactic acid sheet comprising:

    a polylactic acid resin,
    wherein the foamed polylactic acid sheet has a bulk density of 0.250 or less g/cm$^3$,
    the foamed polylactic acid sheet has a melt viscosity of 5,000 to 30,000 Pa s at 190 degrees Celsius,
    the foamed polylactic acid sheet has a crystallinity of 35 or less percent as analyzed by differential scanning calorimetry.

2.  The foamed polylactic acid sheet according to claim 1, wherein the crystallinity is 30 or less percent.

3.  The foamed polylactic acid sheet according to claim 1 or 2, having a foam diameter of 300 or less $\mu$m.

4.  The foamed polylactic acid sheet according to any one of claims 1 to 3, having a closed cell foam ratio of 50 or more percent.

5.  The foamed polylactic acid sheet according to any one of claims 1 to 4, wherein a polylactic acid of the polylactic acid resin has an optical purity of 99 or less percent.

6.  The foamed polylactic acid sheet according to any one of claims 1 to 5, further comprising a filler.

7.  The foamed polylactic acid sheet according to claim 6, wherein the filler comprises mica.

8.  The foamed polylactic acid sheet according to claim 6, wherein the filler has a volume average particle diameter of 0.1 to 100 $\mu$m.

9.  The foamed polylactic acid sheet according to claim 6, wherein the filler accounts for 0.3 to 5 percent by mass of the foamed polylactic acid sheet.

10. The foamed polylactic acid sheet according to any one of claims 1 to 9, having a thickness of 0.5 to 1.55 mm.

11. A method of manufacturing a foamed polylactic acid sheet comprising:

    melting a polylactic acid resin;
    kneading the polylactic acid resin under a presence of a compressive fluid to obtain a polylactic acid resin composition;
    purging the polylactic acid resin composition of the compressive fluid; and
    expanding the polylactic acid resin composition to obtain the foamed polylactic acid sheet with a bulk density of 0.250 or less g/cm$^3$, a melt viscosity of 5,000 to 30,000 Pa s at 190 degrees C, and a crystallinity of 35 or less percent as analyzed by differential scanning calorimetry.

12. A product comprising:
    the foamed polylactic acid sheet of any one of claims 1 to 10.

13. A product obtained by molding the foamed polylactic acid sheet of any one of claims 1 to 10.

FIGURE 1

Europäisches
Patentamt

European
Patent Office

Office européen
des brevets

# EUROPEAN SEARCH REPORT

Application Number

EP 23 20 6538

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 4 578309 B2 (SEKISUI PLASTICS) 10 November 2010 (2010-11-10) | 1-5, 10-13 | INV. C08J9/00 B29C44/34 C08J9/12 |
| A | * paragraph [0056]; examples 1, 3-6; tables 1-3 * | 6-9 | |
| X | US 2022/161467 A1 (NEMOTO TAICHI [JP] ET AL) 26 May 2022 (2022-05-26) * paragraphs [0145] – [0149]; figure 4; examples 1-7; table 1 * * paragraphs [0054] – [0060] * | 1-13 | |

TECHNICAL FIELDS
SEARCHED      (IPC)

C08J
B29C

The present search report has been drawn up for all claims

| Place of search | Date of completion of the search | Examiner |
|---|---|---|
| The Hague | 14 March 2024 | Mayer, Anne |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 20 6538

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2024

| Patent document cited in search report | | Publication date | Patent family member(s) | | Publication date |
|---|---|---|---|---|---|
| JP 4578309 | B2 | 10-11-2010 | JP | 4578309 B2 | 10-11-2010 |
| | | | JP | 2006002137 A | 05-01-2006 |
| US 2022161467 | A1 | 26-05-2022 | CN | 114539745 A | 27-05-2022 |
| | | | EP | 4001351 A1 | 25-05-2022 |
| | | | JP | 2022180468 A | 06-12-2022 |
| | | | US | 2022161467 A1 | 26-05-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4042206 B
- JP H11302521 A
- JP 4578309 B
- JP 2006002137 A
- JP 2015101620 A

**Non-patent literature cited in the description**

- Structure, Properties, Biodegradability of Aliphatic Polyesters. **INOUE, Y.** Polymers. 2001, vol. 50, 374-377
- **YANG.R ; OZISIK R.** *Polymer,* 2006, vol. 47, 2849